# EUROPÄISCHE PATENTSCHRIFT

(11) **EP 3 386 293 B1**
(45) Veröffentlichungstag und Bekanntmachung des Hinweises auf die Patenterteilung: **21.10.2020**
(21) Anmeldenummer: 16769976.8
(22) Anmeldetag: 19.09.2016
(51) Int. Cl.: A01K 31/16, A01K 1/01, A01K 31/04, B65G 23/12, B65G 23/22

(54) **GEFLÜGELBANDANLAGE**
CONVEYOR BELT INSTALLATION FOR POULTRY
INSTALLATION DE BANDE TRANSPORTEUSE DE VOLAILLES

(30) Priorität: 11.12.2015 WO PCT/EP2015/079398
(43) Veröffentlichungstag der Anmeldung: 17.10.2018
(73) Patentinhaber: Kühlmann, Franz Josef, 48366 Laer (DE)
(72) Erfinder: Kühlmann, Franz Josef, 48366 Laer (DE)
(74) Vertreter: Habbel, Ludwig
(86) Internationale Anmeldenummer: PCT/EP2016/072134
(87) Internationale Veröffentlichungsnummer: WO 2017/097451

(56) Entgegenhaltungen:
- EP-A1- 1 358 941
- DE-A1- 19 624 639
- DE-C1- 4 313 456
- GB-A- 1 203 340
- US-A- 2 302 314
- US-A- 3 055 485

## Beschreibung

Die Erfindung betrifft eine Geflügelbandanlage nach dem Oberbegriff des Anspruchs 1.

Aus der US 2 302 314 A ist eine solche mehrstöckige Geflügelbandanlage am Beispiel einer dreistöckigen Geflügelbandanlage bekannt. Von einem gemeinsamen Antriebsmotor werden die Geflügelbänder angetrieben, wobei als Übertragungselemente Wellen verwendet werden und das jeweilige Antriebselement, welches zwischen einer Welle und einer Antriebswalze des Geflügelbandes angeordnet ist, als Winkelgetriebe in Form eines Kegelradgetriebes ausgestaltet ist.

Auch aus der GB 1 203 340 ist eine dreistöckige Geflügelbandanlage bekannt. Von einem gemeinsamen Antriebsmotor werden über eine Kette zwei Geflügelbänder angetrieben, die sich in der obersten Etage einer mehrstöckigen Geflügelhaltungsanlage befinden. Die beiden Geflügelbänder dienen als Futterband und als Kotband, und der Kettenantrieb wirkt an einem ersten, diesseitigen Ende dieser Etage auf Antriebswalzen ein, um welche die beiden Bänder verlaufen. Vom gegenüberliegenden, jenseitigen Ende dieser obersten Etage wird die Antriebsbewegung mittels einer Kette zu der darunter befindlichen mittleren Etage übertragen, nämlich auf die Antriebswalzen, die am jenseitigen Ende der mittleren Etage zum Antrieb der Geflügelbänder dieser mittleren Etage dienen. Am diesseitigen Ende der mittleren Etage ist wiederum eine Kette vorgesehen, die dazu dient, die Antriebsbewegung zu der darunter befindlichen unteren Etage zu übertragen.

Aus der US 3 055 485 A ist eine Geflügelhaltungsanlage bekannt, die bandlos ausgestaltet ist und zum Materialtransport, beispielsweise zum Transport von Futter oder zum Abtransport von Geflügelkot, eine Kette aufweist, die als geschlossen umlaufende Schlaufe geführt ist. An der Kette sind Kratzer befestigt, die dazu dienen, in Futter- bzw. Kotrinnen das jeweilige Material zu verschieben.

Im Rahmen des vorliegenden Vorschlags wird als Geflügelband ein Transport- bzw. Förderband bezeichnet, welches im Bereich der Geflügelhaltung verwendet wird, beispielsweise als Kotband oder als Eierförderband. Nachfolgend wird die Erfindung rein beispielhaft anhand eines Kotbandes erläutert, welches allerdings stellvertretend auch für andere Geflügelbänder steht, beispielsweise auch für ein Eierförderband.

Auch aus der DE 43 13 456 C1 ist eine mehrstöckige Geflügelbandanlage bekannt. Für den Antrieb von Kotförderbändern dienen Antriebsrollen in jeder Etage. Wie die Antriebsrollen ihrerseits angetrieben sind, ist in der DE 43 13 456 C1 nicht erläutert. Aus der Praxis ist es bekannt, dass ein Kotband einer Geflügelbandanlage um Walzen geführt wird, von denen wenigstens eine als so genannte Antriebsrolle selbst angetrieben ist und dazu dient, die Bewegung auf das Kotband zu übertragen. Die Walzen können aus mehreren Elementen bestehen. Beispielsweise können die Walzen ein äußere, hülsenförmiges Element aufweisen und ein inneres, stützendes Element, welches z. B. bei einer Antriebsrolle als angetriebene Achse, oder z. B. bei einer Umlenkrolle als nicht angetriebene Achse ausgestaltet sein kann. Zwischen äußerem und innerem Element können die Walzen Lager aufweisen. Bei aus der Praxis bekannten Hühnerställen ist ein Motor vorgesehen, von dem aus sich ein Übertragungselement in Form einer Kette vom Motor bis zur Antriebsrolle erstreckt. Im Bereich der Antriebsrolle ist als Antriebselement ein Kettenrad vorgesehen, welches durch die Kette angetrieben ist und welches typischerweise auf derselben Achse läuft, um die sich auch die Antriebsrolle dreht, so dass auf diese Weise mittels des Kettenrades auch die Antriebsrolle in Drehung versetzt wird.

Aus der DE 196 24 639 A1 ist eine Vorrichtung zum Verschwenken einer Walze für eine laufende Bahn bekannt, die insbesondere im Naßbereich einer Papiermaschine einsetzbar ist. Eine schwenkbar gelagerte erste Walze ist drehbar und zwischen zwei drehbar gelagerten Walzen angeordnet. Mittels eines Winkelgetriebes kann eine Welle, die sich durch die Walze hindurch erstreckt und daher im Rahmen des vorliegenden Vorschlags als Teil der Walze angesehen wird, relativ zur Bahn verschwenkt werden, um den Bahnlauf zu beeinflussen.

Aus der EP 1 358 941 A1 ist ein Schneidwerkzeug für einen Dokumentenvernichter bekannt, bei dem zwei benachbarte, angetriebene Schneidwalzen Schneidscheiben aufweisen, die abwechselnd ineinander greifen. Die beiden Schneidwalzen weisen einen gemeinsamen Antriebsmotor auf, der auf die erste Schneidwalze einwirkt, und über Zahnräder treibt die erste Schneidwalze die zweiten Schneidwalze an. Alternativ kann der Antriebsmotor die zweite Schneidwalze antreiben, oder beiden Schneidwalzen kann jeweils ein eigener Antriebsmotor zugeordnet sein.

Der Erfindung liegt die Aufgabe zugrunde, eine gattungsgemäße Geflügelbandanlage dahingehend zu verbessern, dass diese einen möglichst sicheren und wartungsarmen Betrieb ermöglicht, und die mit möglichst geringem Aufwand konstruktive Abwandlungen ermöglicht. Weiterhin soll die Geflügelbandanlage besonders wirtschaftlich herstellbar sein.

Diese Aufgabe wird durch eine Geflügelbandanlage mit den Merkmalen des Anspruchs 1 gelöst. Vorteilhafte Ausgestaltungen sind in den Unteransprüchen beschrieben.

Die Erfindung schlägt mit anderen Worten vor, keine Kette, sondern vielmehr eine Welle als Übertragungselement zu verwenden. Die Gefahren einer offen laufenden Kette können auf diese Weise vermieden werden. Da die Welle eine geschlossene Oberfläche aufweist, können beispielsweise keine Gegenstände in die Welle geraten, was einerseits Unfallgefahren für das Personal und andererseits die Wahrscheinlichkeit von Störungen der Geflügelbandanlage verringert. Sollte zu Gunsten eines besonders sicheren Betriebs eine Kapselung der sich drehenden Welle vorgesehen sein, so kann dies - im Vergleich zu einem gekapselten Kettentrieb - mit äußerst geringem Platzbedarf und zu äußerst geringen Kosten durch ein Hüllrohr verwirklicht werden, in dem die Welle läuft. Aufgrund des geringen Platzbedarfs sind die Anlagenteile der Geflügelbandanlage sehr gut zugänglich. Zusätzliche Bauelemente wie beispielsweise Kettenspanner o. dgl. sind für den Betrieb des Übertragungselements, vorschlagsgemäß nämlich der Welle, nicht erforderlich, so dass auch diesbezüglich keine Wartung des Kotbandantriebs erforderlich wird.

Als Antriebselement ist ein Winkelgetriebe vorgesehen, also ein Getriebe, welches vorschlagsgemäß als Schneckengetriebe ausgestaltet ist und die Drehachse des Antriebs in einem Winkel von beispielsweise 90° umlenkt. So kann die Welle beispielsweise liegend und etwa parallel zum Kotband verlaufen, und die Drehachse kann mittels des Winkelgetriebes um 90° umgelenkt werden, entsprechend der Drehachse einer Walze, um welche das Gurtband umläuft und deren Achse quer zur Längsrichtung des Kotbandes verläuft. Oder die Welle kann aufrecht verlaufen, und die Drehachse des Antriebs kann mittels des Winkelgetriebes um etwa 90° umgelenkt werden, entsprechend der liegend ausgerichteten Drehachse einer Walze, um welche das Gurtband umläuft.

Winkelgetriebe sind fertig konfektioniert handelsüblich, so dass Schneckengetriebe mit unterschiedlichen Getriebeabstufungen, also unterschiedliche Über- oder Untersetzungen, erhältlich sind. Ggf. können innerhalb desselben Gehäuses zwei unterschiedliche Getriebeverzahnungen vorgesehen sein: beispielsweise eine Stirnradverzahnung zur Drehzahl- und Drehmomenten-Änderung, und dieser Stirnradverzahnung vor- oder nachgeschaltet eine Getriebeverzahnung zur Umlenkung der Drehachse, nämlich das Schneckengetriebe.

In Anpassung an das jeweils zu übertragende Drehmoment, an die zur Verfügung stehende Antriebsleistung, an die gewünschte Getriebeabstufung, sowie in Abhängigkeit von den jeweiligen baulichen Abmessungen eines Winkelgetriebes, also in Anpassung an den zur Verfügung stehenden Einbauraum können daher die gewünschten Winkelgetriebe wirtschaftlich und kurzfristig bereitgestellt werden. Üblicherweise weisen diese handelsüblichen Winkelgetriebe ein geschlossenes Gehäuse auf, innerhalb dessen die eigentlichen Getriebeelemente angeordnet sind. Vielfach werden die gleichen Gehäuse, also mit identischen Abmessungen, für Winkelgetriebe mit unterschiedlichen Getriebeabstufungen verwendet, wodurch die konstruktive Auslegung einer Kotbandanlage vereinfacht wird.

Das Winkelgetriebe weist beispielsweise eine vergleichsweise kurze, aus dem Getriebegehäuse herausragende Achse als antriebseitigen Eingang auf als Anschluss, der in an sich bekannter Weise mit der Welle verbunden werden kann, um die Antriebsenergie in das Winkelgetriebe einzuleiten. Weiterhin weist das Winkelgetriebe abtriebseitig einen Anschluss auf, der als Ausgang bezeichnet ist und beispielsweise ebenfalls als vergleichsweise kurze Achse ausgestaltet sein kann und der die Verbindung zur Walze ermöglicht, beispielsweise mit der Achse verbunden werden kann, um welche sich die Antriebsrolle dreht. Derartige Winkelgetriebe sind in unterschiedlichen Übersetzungsverhältnissen handelsüblich. Sie weisen ein Gehäuse auf, so dass die eigentlichen Getriebe-Verzahnungselemente gekapselt sind, was hinsichtlich etwaiger Unfallgefahren einen sicheren Betrieb des Kotbandantriebs ermöglicht. Die gekapselte Ausgestaltung des Winkelgetriebes, typischerweise mit einer wartungsfreien Fettfüllung, reduziert den für den Kotbandantrieb erforderlichen Wartungsaufwand, so dass auch die Betriebskosten des Kotbandantriebs vorteilhaft niedrig gehalten werden.

Ein weiterer Vorteil der vorschlagsgemäß vorgesehenen Winkelgetriebe besteht in ihrer kompakten Bauweise. Je nach dem gewünschten Übersetzungsverhältnis, welches für den Betrieb der Antriebsrolle mit der konstruktiv vorgesehenen Drehzahl gewünscht bzw. erforderlich ist, kann im Vergleich zu Kettenrädern der erforderliche Platzbedarf im Bereich des Antriebselements erheblich verringert werden, so dass ein vorschlagsgemäß ausgestalteter Kotbandantrieb für viele konstruktiv unterschiedlich ausgestaltete Hühnerställe verwendet werden kann. Insbesondere die konstruktive Auslegung von unterschiedlichen Kotbandanlagen, bei denen sich die Antriebsrollen der Kotbänder mit unterschiedlichen Drehzahlen drehen sollen, erfordert durch die vorschlagsgemäße Ausgestaltung des Kotbandantriebs lediglich die Verwendung des jeweils geeigneten Winkelgetriebes mit der jeweils geeigneten Übersetzung, nicht jedoch die Anpassung des Hühnerstalls an unterschiedliche Durchmesser der verwendeten Kettenräder.

Um die Kotbänder sauber halten zu können und das Anhaften von Kot zu erschweren, sind die Kotbänder an ihrer Oberfläche sehr gleitfreudig ausgestaltet. Aus diesem Grunde ist es bekannt, der Antriebsrolle in vielen Fällen auch eine Andruckrolle zuzuordnen. Das Kotband verläuft in diesen Fällen um die Antriebsrolle und auch zwischen der Antriebsrolle und der Andruckrolle hindurch. Die Andruckrolle kann derart angeordnet sein, dass sie ihrer Bezeichnung entsprechend das Kotband tatsächlich an die Antriebsrolle andrückt. Es kann jedoch auch vorgesehen sein, dass der Abstand zwischen Antriebsrolle und Andruckrolle größer ist als es der Dicke des Kotbandes entspricht, so dass die Andruckrolle das Kotband nicht im Wortsinne an die Antriebsrolle andrückt, aber durch die Bandumlenkung für einen möglichst großen Umschlingungswinkel Sorge trägt, mit dem das Kotband um die Antriebsrolle umläuft. Auch in diesen Fällen wird die entsprechende Umlenkrolle mit ihrer traditionellen Bezeichnung als Andruckrolle bezeichnet. Die Andruckrolle ist stets ebenfalls angetrieben, um so die Antriebsleistung möglichst wirksam von der Kette bis zum Kotband zu übertragen. Die Kettenräder der Antriebsrolle und der Andruckrolle kämmen daher beide mit dem Übertragungselement in Form der Kette, und dementsprechend kann je nach Abstand der Antriebs- und Andruckrollen und je nach Durchmesser der gewünschten Kettenräder und deren Durchmesser eine Kollision zwischen den Kettenrädern auftreten, so dass der Kotbandantrieb in einem solchen Fall konstruktiv überarbeitet und neu berechnet werden muss.

Mit einem vorschlagsgemäßen Kotbandantrieb kann eine solche Anlagenkonfiguration, bei der eine Antriebsrolle und eine Andruckrolle nahe benachbart angeordnet sind, besonders einfach und vorteilhaft ausgestaltet werden: In diesem Fall sind zwei Winkelgetriebe einander nahe benachbart, so dass sie die beiden benachbarten, als Antriebsrolle und Andruckrolle bezeichneten Walzen in Drehung versetzen. Dabei sind die beiden Winkelgetriebe konstruktiv so ausgelegt, dass sie unterschiedliche Drehrichtungen aufweisen, damit Antriebs- und Andruckrolle in an sich bekannter Weise mit unterschiedlichen Drehrichtungen laufen können, ohne dass zwischen einem Winkelgetriebe und einer der beiden Walzen zusätzliche Getriebemittel zur Drehrichtungsumkehr erforderlich sind. Damit nicht zwei separate Wellen vom Antriebsmotor zu den beiden Winkelgetrieben geführt werden müssen, weist eines der beiden Winkelgetriebe einen zweiten Ausgang auf, der als Weiterleitung bezeichnet wird. Über eine Zwischenwelle ist diese Weiterleitung mit dem Eingang des zweiten Winkelgetriebes verbunden. In Anpassung an die unterschiedlichen Durchmesser von Antriebs- und Andruckrolle weisen die beiden Winkelgetriebe ggf. unterschiedliche Übersetzungsverhältnisse auf.

Die erwähnte Weiterleitung kann vorteilhaft in Art einer Verlängerung des Eingangs ausgestaltet sein, so dass der Eingang und die Weiterleitung desselben Winkelgetriebes mit derselben Drehzahl laufen. Dies ermöglicht eine konstruktiv besonders einfache und dementsprechend wirtschaftliche Ausgestaltung dieses Winkelgetriebes.

Vorteilhaft kann die Zwischenwelle zu Gunsten einer Abstandsveränderung der beiden Winkelgetriebe zueinander in Art eines Schiebestücks an das eine und / oder an das andere Winkelgetriebe anschließen. Die Abstandsveränderungen zwischen den beiden Antriebs- und Andruckrollen können ggf. in Form einer Parallelverschiebung erfolgen, es kann jedoch auch vorgesehen sein, eine der beiden Walzen bewusst schräg zur anderen Walze auszurichten, um so den Bandlauf zu beeinflussen und beispielsweise ein seitliches Abwandern des Bandes aus seiner konstruktiv vorgesehenen Bandlaufspur zu verhindern. Die Zwischenwelle kann vorteilhaft aus einem Stangen- bzw. Rohrmaterial bestehen, welches als Halbzeug vorliegt und in Anpassung an die jeweilige konstruktive Ausgestaltung der Kotbandanlage auf das gewünschte Maß abgelängt wird, in Anpassung an den gewünschten Abstand der beiden Winkelgetriebe zueinander. Hierdurch wird eine sehr wirtschaftliche Ausgestaltung der Kotbandanlage und insbesondere des Kotbandantriebs bereits von der grundsätzlichen Konstruktion des Kotbandantriebs her ermöglicht. Eine Feinjustage des Abstandes zwischen den beiden benachbarten Winkelgetrieben macht jedoch vorteilhaft nicht den Einsatz jeweils exakt angepasster Zwischenwellen erforderlich, sondern bei der vorteilhaften Ausgestaltung als Schiebestück können Feinjustagen erfolgen, indem die Zwischenwelle an die Weiterleitung des einen Winkelgetriebes bzw. an den Eingang des anderen Winkelgetriebes in der Weise anschließt, dass die beiden betreffenden Bauteile relativ zueinander in axialer Richtung verschoben werden können.

Die erwähnte Feinjustage kann vorteilhaft auch dadurch ermöglicht werden, dass wenigstens eines der beiden Winkelgetriebe mit Hilfe von Langlöchern an einer Halterung montiert ist, welche dieses Winkelgetriebe trägt. Es kann sich dabei um einen Maschinenrahmen der Kotbandanlage handeln oder um eine Halterung, die an dem einen Winkelgetriebe befestigt ist und ihrerseits das andere Winkelgetriebe trägt. Die Langlöcher können dabei im Gehäuse des jeweiligen Winkelgetriebes angeordnet sein oder in der Halterung selbst, so dass jedenfalls im Ergebnis die Befestigung des Winkelgetriebes in unterschiedlichen Positionen an der Halterung ermöglicht ist und auf diese Weise unterschiedliche Abstände zwischen den beiden Winkelgetrieben eingestellt werden können.

Vorteilhaft kann in geringem Umfang eine Schrägstellung der jeweiligen Walze gegenüber dem Winkelgetriebe ermöglicht sein, welches diese Walze, beispielsweise die Antriebsrolle oder die Andruckrolle, antreibt. Zu diesem Zweck kann eine separate Winkelausgleichskupplung als zusätzliches Bauelement zwischen dem Winkelgetriebe und der ihm zugeordneten Walze angeordnet sein. Alternativ dazu kann jedoch auch der Ausgang des Winkelgetriebes selbst als Winkelausgleichskupplung ausgestaltet sein, beispielsweise indem das Ende des Ausgangs pilzkopfähnlich ausgeformt ist. Als pilzkopfähnliche Ausformung ist in diesem Zusammenhang gemeint, dass der Ausgang erstens, im Längsschnitt gesehen, eine zu seinem Ende hin verrundete Kontur aufweist, so dass die zugeordnete Walze schräg an den Ausgang des Winkelgetriebes anschließen kann, und dass der Ausgang zweitens im Abstand von seinem Ende eine umlaufende Taille aufweist, in welche die Achse der Walze bei einer eventuellen Schrägstellung geringfügig eintauchen kann. Durch die Winkelausgleichskupplung wird jedenfalls eine Justage der jeweiligen Walze ermöglicht, ohne dass hierzu das diese Walze antreibende Winkelgetriebe ebenfalls neu ausgerichtet und schräg montiert werden müsste.

Die konstruktiv einfache und platzsparende Ausgestaltung des vorschlagsgemäßen Kotbandantriebs ermöglicht insbesondere vorteilhaft eine besonders wirtschaftliche Ausgestaltung einer Kotbandanlage, bei der zwei Kotbänder übereinander in zwei oder mehr Etagen angeordnet sind, wie dies beispielsweise von Hühnerställen bekannt ist, in denen die Hühner in mehreren Etagen übereinander gehalten werden. Wirtschaftlich vorteilhaft kann für sämtliche Etagen, beispielsweise zwei oder drei Etagen, ein gemeinsamer Antriebsmotor vorgesehen sein, von dem aus eine gemeinsame Welle für sämtliche Kotbandantriebe verläuft. Durch Verteilergetriebe kann die Drehbewegung von dieser Welle, die beispielsweise Teil eines ersten Kotbandantriebs ist, abgezweigt werden, so dass eine aufrechte Verbindungswelle in die benachbarte Etage verläuft, so dass dort ein zweiter vorschlagsgemäß ausgestalteter Kotbandantrieb mittels desselben Antriebsmotors angetrieben werden kann und die Mehrkosten, die ansonsten durch die Verwendung eines eigenen Antriebsmotors in jeder Etage verursacht würden, vermieden werden können.

Eine besonders wirtschaftliche Ausgestaltung der Geflügelbandanlage kann dadurch ermöglicht werden, dass nicht zwei Winkelgetriebe verwendet werden, um den Drehantrieb der Welle einerseits auf die Antriebsrolle und andererseits auf die Andruckrolle zu übertragen, sondern das mittels eines einzigen Winkelgetriebe lediglich eine dieser beiden Rollen angetrieben wird und der Antrieb der jeweils anderen Rolle durch ein Zahnradpaar erfolgt. Besonders wirtschaftlich kann dazu eine Stirnradverzahnung verwendet werden.

Die Verzahnung des Zahnradpaares kann vorteilhaft derart ausgestaltet sein das ein Spiel zwischen den beiden Zahnrädern zulässig ist, welches 2 bis 8 mm beträgt. Somit kann der Achsabstand zwischen der Antriebsrolle und der Andruckrolle im Sinne einer Justage verstellt bzw. eingestellt werden. Besonders vorteilhaft kann ein Spiel von 3 bis 5 mm konstruktiv vorgesehen sein, da dies einerseits einen problemlosen und zuverlässigen Betrieb des Zahnradpaares und andererseits einen ausreichend großen Verstellbereich des Achsabstandes sicherstellt.

Der vorliegende Vorschlag wird anhand der rein schematischen Darstellungen nachfolgend näher erläutert. Dabei zeigt
- Fig. 1: eine perspektivische Ansicht auf ein erstes Ausführungsbeispiel von Elementen einer Geflügelbandanlage mit zwei Etagen,
- Fig. 2: eine Ansicht auf die Anordnung der Fig. 1 aus einer anderen Blickrichtung, und die
- Fig. 3 bis 5: Ansichten aus drei unterschiedlichen Perspektiven auf ein zweites Ausführungsbeispiel einer ansonsten gleichen Geflügelbandanlage, wobei das Geflügelband nicht dargestellt ist.

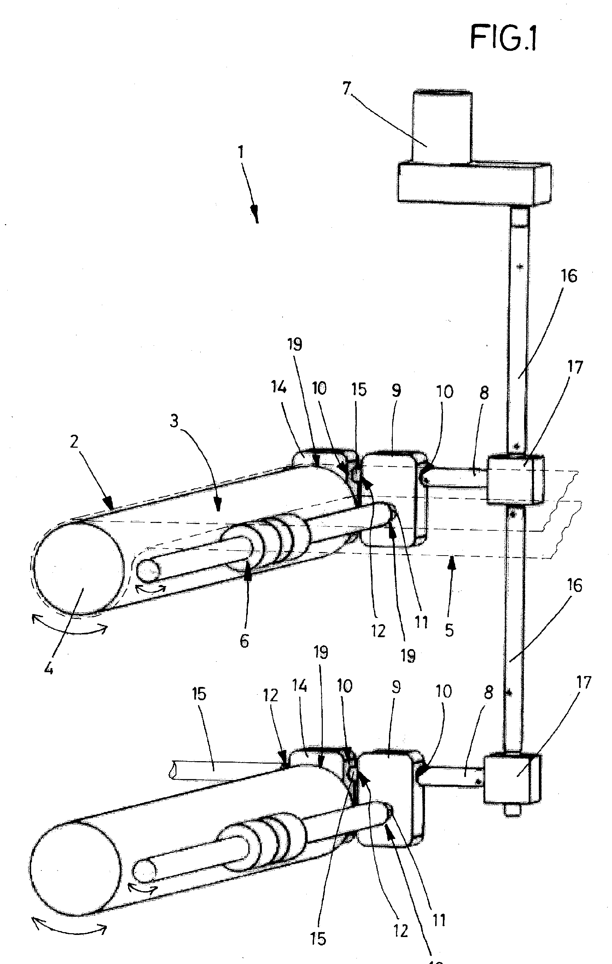

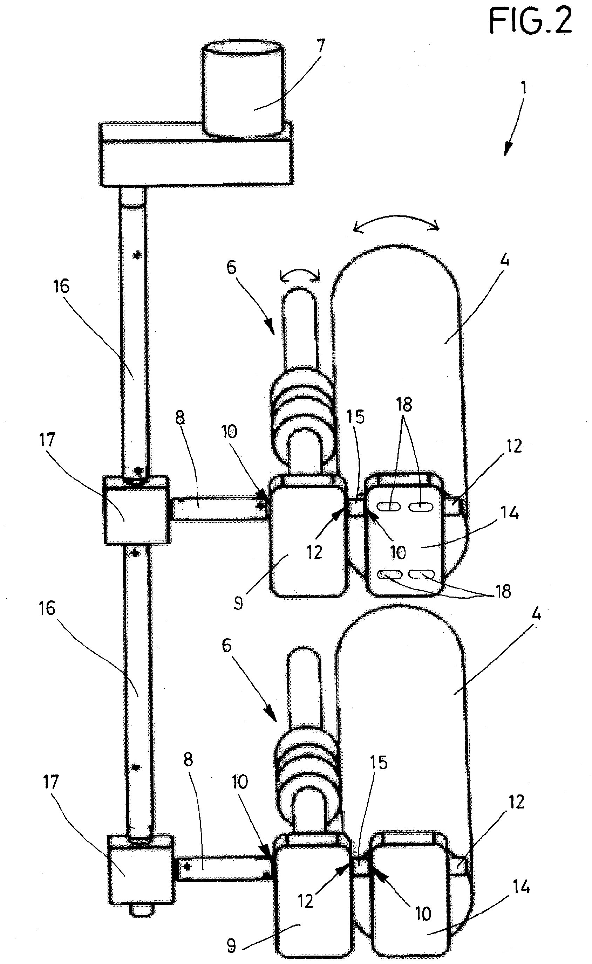

In den Figuren 1 und 2 ist jeweils schematisch und nur ausschnittsweise eine Geflügelbandanlage dargestellt, die als Kotbandanlage 1 ausgestaltet ist und ein Kotband 2 aufweist, das in gestrichelten Linien angedeutet ist. Ein Obertrum 3 des Kotbandes 2 ist um eine als Antriebsrolle 4 bezeichnete Walze geführt und dessen Untertrum 5 verläuft über eine als Andruckrolle 6 bezeichnete Walze, so dass das Kotband 2 einen besonders großen Umschlingungswinkel von mehr als 180° an der Antriebsrolle 4 aufweist. Die Andruckrolle 6 ist bei dem dargestellten Ausführungsbeispiel - insofern anders als die Antriebsrolle 4 - nicht als Walze ausgestaltet die über ihre gesamte Breite einen kontinuierlich gleichen Durchmesser aufweist, sondern vielmehr ist sie mit einer Welle verwirklicht, die einzelne Walzenkörper trägt, welche einerseits voneinander beabstandet angeordnet sind, und welche andererseits auch nicht über die gesamte Länge der Welle verteilt angeordnet sind. Rein beispielhaft sind lediglich zwei derartige Walzenkörper dargestellt.

Die Achsen der beiden Walzen, also der Antriebsrolle 4 und der Andruckrolle 6, sind in getrennten Lagerschilden gelagert, so dass die beiden Antriebs- und Andruckrollen 4 und 6 unabhängig voneinander relativ zum Kotband 2 eingestellt werden können. Dies betrifft einerseits eine Schrägstellung der jeweiligen Walze gegenüber der Längsrichtung des Kotbandes 2, und dies betrifft auch eine Parallelverschiebung der jeweiligen Walze in Längsrichtung des Kotbandes 2, so dass auf diese Weise auch der Abstand zwischen der Antriebsrolle 4 und der Andruckrolle 6 eingestellt werden kann.

Von einem Antriebsmotor 7 wird ein Übertragungselement in Form einer Welle 8 angetrieben, welche zu einem schematisch mit 9 angedeuteten Winkelgetriebe verläuft, welches seinerseits die Andruckrolle 6 antreibt. Dabei handelt es sich bei dem verwendeten Winkelgetriebe jeweils um ein Schneckengetriebe.

Das Winkelgetriebe 9 weist antriebsseitig einen so genannten Eingang 10 auf und abtriebseitig einen Ausgang 11, der auf die Achse der Andruckrolle 6 einwirkt. Zudem weist das erste Winkelgetriebe 9 einen zweiten Ausgang auf, der als Weiterleitung 12 bezeichnet ist und der zum Antrieb eines zweiten Winkelgetriebes 14 dient. Eine so genannte Zwischenwelle 15 verbindet die Weiterleitung 12 des ersten Winkelgetriebes 9 mit einem Eingang 10 des zweiten Winkelgetriebes 14, wobei ein Ausgang 11 des zweiten Winkelgetriebes 14 auf die Achse der Antriebsrolle 4 einwirkt. Die Zwischenwelle 15 ist in ihrer axialen Richtung schiebebeweglich an die Weiterleitung 12 und / oder an den Eingang 10 des zweiten Winkelgetriebes 14 angeschlossen.

Die Zeichnungen zeigen einen Kotbandantrieb einer mehrstöckigen Kotbandanlage 1, wobei beispielhaft zwei Etagen vorgesehen sind: Für sämtliche Etagen ist ein gemeinsamer Antriebsmotor 7 vorgesehen, von dem aus eine so genannte Hauptwelle 16 zu den einzelnen Etagen in aufrechter Richtung verläuft. Ein oberes so genanntes Abzweig- oder Verteilergetriebe 17 unterbricht diese aufrecht verlaufende Hauptwelle 16 und treibt die liegend verlaufende Welle 8 des Kotbandantriebs in der oberen Etage an.

Die Anordnung einer Antriebsrolle 4 sowie einer Andruckrolle 6 ist in jeder Etage jeweils an beiden Enden eines Kotbandes 2 vorgesehen. Wie dies in Fig. 1 für die untere der beiden Etagen angedeutet ist, erstreckt sich von dem zweiten Winkelgetriebe 14 aus eine weitere, lange Zwischenwelle 15 bis zum zweiten Ende des Kotbandes 2, wo dann wiederum zwei Winkelgetriebe 9 und 14 zum Antrieb der dort vorgesehenen Antriebsrolle 4 und Andruckrolle 6 vorgesehen sind. Aus diesem Grund weisen die in den Zeichnungen ersichtlichen zweiten Winkelgetriebe 14 jeweils ebenfalls eine Weiterleitung 12 auf, um derartige lange Zwischenwellen 15 in Drehung versetzen zu können.

Von dem oberen Verteilergetriebe 17 aus erstreckt sich ein weiterer Abschnitt der Hauptwelle 16 nach unten zu einem weiteren Verteilergetriebe 17 in einer tiefer angeordneten Etage der Kotbandanlage 1. Der Kotbandantrieb in dieser niedrigeren Etage ist bei dem dargestellten Ausführungsbeispiel grundsätzlich genauso ausgestaltet wie der Kotbandantrieb der oberen Etage. Bei einer Ausgestaltung der Kotbandanlage 1 mit drei oder mehr Etagen schließen sich dementsprechend weitere Verteilergetriebe 17 und weitere Kotbandantriebe nach unten bzw. oben hin an.

Innerhalb der äußerlich gleichen Getriebegehäuse der ersten und zweiten Winkelgetriebe 9 und 14 können unterschiedliche Getriebeabstufungen verwendet werden, beispielsweise wenn die Kotbänder 2 in den unterschiedlichen Etagen mit unterschiedlichen Geschwindigkeiten laufen sollen, oder wenn sie mit der gleichen Geschwindigkeit laufen sollen, jedoch durch die Verteilergetriebe 17 die Wellen 8 in unterschiedlichen Etagen mit unterschiedlichen Drehzahlen angetrieben werden.

Rein beispielhaft ist lediglich im Gehäuse des zweiten Winkelgetriebes 14 in der oberen Etage von Fig. 2 angedeutet, dass in den Getriebegehäusen Langlöcher 18 angeordnet sind, die liegend verlaufen, so dass mittels dieser Langlöcher 18 das zweite Winkelgetriebe 14 in unterschiedlichen Abständen zum ersten Winkelgetriebe 9 montiert werden kann.

Weiterhin ist anhand von gebogenen Doppelpfeilen angedeutet, dass die beiden Walzen, nämlich die Antriebsrolle 4 und die Andruckrolle 6 in geringem Maße winkelbeweglich an die Winkelgetriebe 9 und 14 anschließen können, da im Bereich der Ausgänge 11 die Winkelgetriebe 9 und 14 eine Winkelausgleichskupplung 19 aufweisen. Die Winkelausgleichskupplung 19 kann als separates Kupplungselement ausgestaltet sein, welches zwischen dem Ausgang 11 und der jeweiligen Walze montiert wird. Sie kann jedoch auch in der Ausgestaltung des jeweiligen Ausgangs 11 unmittelbar verwirklicht sein.

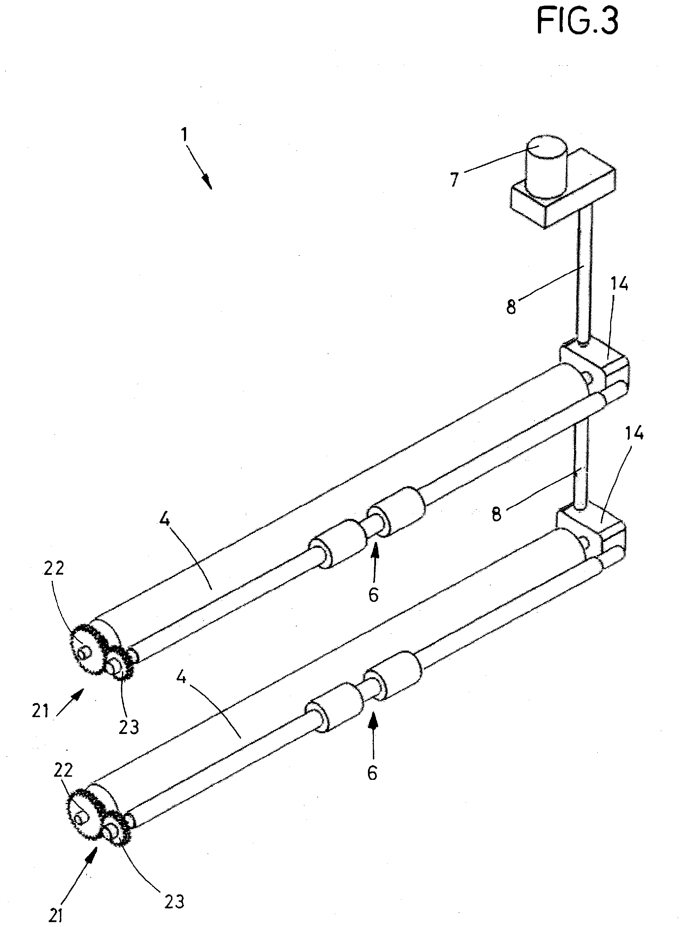

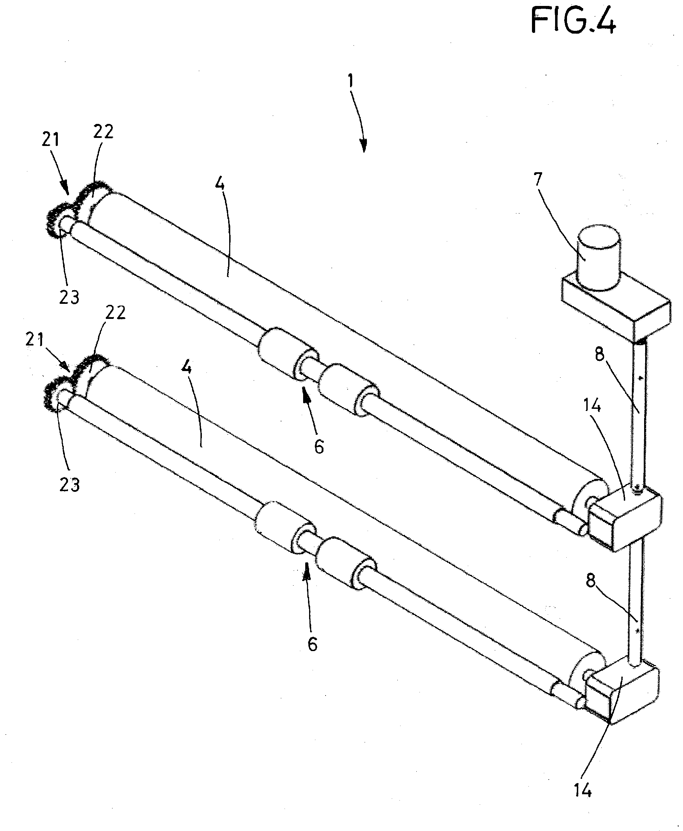

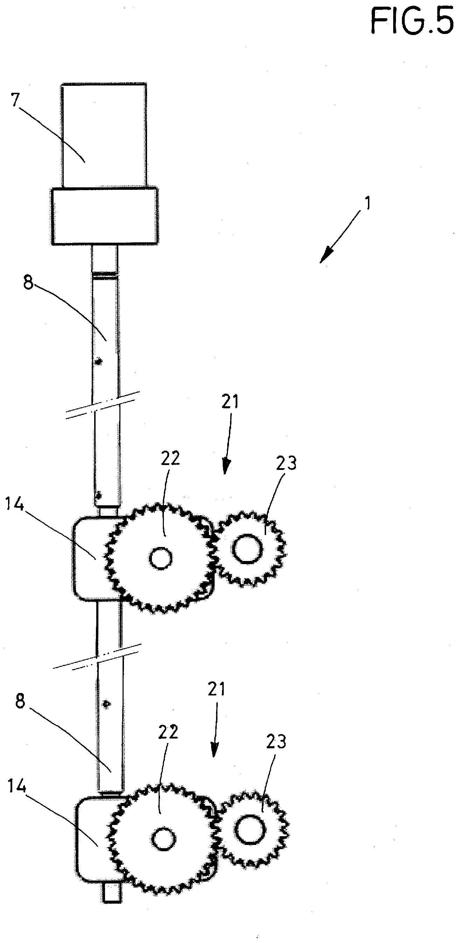

In den Fig. 3 bis 5 ist ein zweites Ausführungsbeispiel einer Geflügelbandanlage dargestellt, die ebenfalls als Kotbandanlage 1 ausgestaltet ist, wobei jedoch das eigentliche Kotband 2 in diesen Zeichnungen nicht dargestellt ist. Vom Antriebsmotor 7 verläuft eine Welle 8 zu den Winkelgetrieben 14, welche die Antriebsrollen 4 in den beiden übereinander angeordneten Etagen der Geflügelbandanlage 1 antreiben. Abweichend von dem dargestellten Ausführungsbeispiel könnte auch vorgesehen sein, mittels eines Winkelgetriebes 9 von der Welle 8 die Andruckrolle 6 anzutreiben, wobei in diesem Fall das Winkelgetriebe 14 für den Antrieb der Antriebsrolle 4 entfallen würde.

Da diese Welle 8 sich über beide Etagen erstreckt, ist sie insofern der Hauptwelle 16 der Fig. 1 und 2 ähnlich. Da sie jedoch die Winkelgetriebe 14 antreibt, welche die Antriebsrollen 4 in Drehung versetzen, ist diese Welle mit der Welle Nr. 8 der Fig. 1 und 2 vergleichbar und daher auch in den Fig. 3 - 5 mit der Nr. 8 gekennzeichnet. Auch bei dem Ausführungsbeispiel Fig. 3 bis 5 sind lediglich zwei Etagen angedeutet, jedoch kann sich die Geflügelbandanlage auch lediglich über eine, oder aber über mehr als zwei Etagen erstrecken.

Der Drehantrieb der Andruckrollen 6 erfolgt bei dem Ausführungsbeispiel der Fig. 3 bis 5 nicht über ein zusätzliches Winkelgetriebe, sondern vielmehr über ein Zahnradpaar 21. Ein vergleichsweise größeres erstes Zahnrad 22 dreht sich gemeinsam mit der Antriebsrolle 4, und ein vergleichsweise kleineres zweites Zahnrad 23 dreht sich gemeinsam mit der Andruckrolle 6, wobei die dargestellten Größenverhältnisse der Zahnräder 22 und 23 und somit das Übersetzungsverhältnis des Zahnradpaares 21 rein illustrativ und beispielhaft sind.

Bei dem dargestellten Ausführungsbeispiel ist das Zahnradpaar 21 an dem Ende der Antriebsrolle 4 und der Andruckrolle 6 vorgesehen, welches dem Winkelgetriebe 14 gegenüberliegt, so dass sämtliche dargestellten Bauelemente zugunsten einer einfachen Montage und späteren Wartung gut zugänglich sind. Abweichend davon kann das Zahnradpaar 21 jedoch auch dem Winkelgetriebe 14 nahe benachbart an demselben Ende der Antriebsrolle 4 und der Andruckrolle 6 angeordnet sein.

Zwischen den beiden Zahnrädern 22 und 23 ist ein Spiel von etwa 3 bis 5 mm zulässig, ohne die Funktion des Zahnradpaares 21 zu beeinträchtigen, so dass der Achsabstand zwischen der Antriebsrolle 4 und der Andruckrolle 6 in gewissen Grenzen verändert werden kann. Auch eine Winkelverstellung zwischen der Antriebsrolle 4 und der Andruckrolle 6 ist möglich, indem das freie Ende der Andruckrolle 6, welches dem Winkelgetriebe 14 benachbart ist, der Antriebsrolle 4 angenähert oder von der Antriebsrolle 4 weiter entfernt werden kann. Auf diese Weise kann der Bandlauf des Kotbandes 2 beeinflusst werden.

Bei dem dargestellten Ausführungsbeispiel laufen die Zahnräder 22 und 23 des Zahnradpaares 21 offen. Abweichend davon kann ein Gehäuse vorgesehen sein, welches das Zahnradpaar 21 aufnimmt, so dass einerseits Verschmutzungen oder Funktionsstörungen des Zahnradpaares 21 und andererseits Unfallgefahren durch das Zahnradpaar 21 vermieden werden.

## Patentansprüche

1. Geflügelbandanlage (1),
mit zwei Geflügelbändern (2), die in zwei Etagen übereinander angeordnet sind,
wobei jedes Geflügelband (2) mittels eines Geflügelbandantriebs angetrieben ist,
und wobei die beiden Geflügelbandantriebe durch einen gemeinsamen Antriebsmotor (7) angetrieben und durch Verbindungsmittel antriebswirksam miteinander verbunden sind,
wobei jeder Geflügelbandantrieb ein bewegliches, eine Antriebsbewegung über eine bestimmte Entfernung übertragendes Übertragungselement aufweist,
sowie ein Antriebselement, welches einerseits durch das Übertragungselement angetrieben und in eine Drehbewegung versetzt ist, und welches andererseits eine das Geflügelband (2) führende Walze in Drehung versetzend angeordnet ist,
wobei das jeweilige Übertragungselement als Welle (8) und das jeweilige Antriebselement als Winkelgetriebe (9, 14) ausgestaltet ist,
welches einen antriebseitigen, als Eingang (10) bezeichneten Anschluss zur Verbindung mit der Welle (8) aufweist, und einen abtriebseitigen, als Ausgang (11) bezeichneten Anschluss zur Verbindung mit der Walze aufweist,
und wobei von dem gemeinsamen Antriebsmotor (7) die beiden Geflügelbandantriebe durch eine als Hauptwelle (16) bezeichnete Verbindungswelle antriebswirksam miteinander verbunden sind,
**dadurch gekennzeichnet,**
**dass** ein Winkelgetriebe als Schneckengetriebe (9, 14) ausgestaltet ist.

2. Geflügelbandanlage nach Anspruch 1,
**dadurch gekennzeichnet,**
**dass** zwei Winkelgetriebe (9, 14) einander nahe benachbart und zwei benachbarte, als Antriebsrolle (4) und als Andruckrolle (6) bezeichnete Walzen in Drehung versetzend angeordnet sind,
wobei die Ausgänge (11) der beiden Winkelgetriebe (9, 14) unterschiedliche Drehrichtungen aufweisen,
eines der beiden Winkelgetriebe (9, 14) einen zweiten, als Weiterleitung (12) bezeichneten Ausgang aufweist, und eine Zwischenwelle (15) die Weiterleitung (12) mit dem Eingang (10) des zweiten Winkelgetriebes (14) antriebswirksam verbindet.

3. Geflügelbandanlage nach Anspruch 2,
**dadurch gekennzeichnet,**
**dass** die Weiterleitung (12) in Art einer Verlängerung des Eingangs (10) ausgestaltet ist, derart, dass der Eingang (10) und die Weiterleitung (12) mit derselben Drehzahl laufen.

4. Geflügelbandanlage nach Anspruch 2 oder 3,
**dadurch gekennzeichnet,**
**dass** die Zwischenwelle (15) an die Weiterleitung (12) des einen Winkelgetriebes (9, 14) und / oder an den Eingang (10) des anderen Winkelgetriebes (9, 14) in Art eines Schiebestückes anschließt.

5. Geflügelbandanlage nach einem der Ansprüche 2 bis 4,
**dadurch gekennzeichnet,**
**dass** ein Winkelgetriebe (9, 14) mittels Langlöchern (18) an einer das Winkelgetriebe (9, 14) tragenden Halterung montiert ist,
derart, dass der Abstand zwischen den beiden Winkelgetrieben (9, 14) veränderlich ist.

6. Geflügelbandanlage nach einem der vorhergehenden Ansprüche,
**dadurch gekennzeichnet,**
**dass** zwei als Antriebsrolle (4) und als Andruckrolle (6) bezeichnete Walzen einander benachbart angeordnet sind, wobei ein Winkelgetriebe (9, 14) die Antriebsrolle (4) oder die Andruckrolle (6) antreibend angeordnet ist,
und wobei die Antriebsrolle (4) und die Andruckrolle (6) mittels eine Zahnradpaares antriebswirksam miteinander verbunden sind,
derart, dass die durch das Winkelgetriebe (9, 14) in Drehung versetzte Walze die benachbarte Walze mittels des Zahnradpaares in Drehung versetzt.

7. Geflügelbandanlage nach Anspruch 6,
**dadurch gekennzeichnet,**
**dass** die beiden Zahnräder des Zahnradpaares zwischen sich ein Spiel von 2 mm bis 8 mm aufweisen.

8. Geflügelbandanlage nach Anspruch 6,
**dadurch gekennzeichnet,**
**dass** die beiden Zahnräder des Zahnradpaares zwischen sich ein Spiel von 3 mm bis 5 mm aufweisen.

9. Geflügelbandanlage nach einem der vorhergehenden Ansprüche,
**dadurch gekennzeichnet,**
**dass** der Ausgang (11) eines Winkelgetriebes (9, 14) über eine Winkelausgleichskupplung (19) an die zugeordnete Walze angeschlossen ist.

## Claims

1. Poultry-care conveyor belt system (1),
having two poultry-care conveyor belts (2) that are arranged on two levels, where each poultry-care conveyor belt (2) is driven by means of a poultry-care conveyor belt drive,
and where the two poultry-care conveyor belt drives are driven by means of a common drive motor (7) and are connected together drive-effectively by connecting means,
where each poultry-care conveyor belt drive incorporates a movable transmission element that transmits a drive movement a specific distance,
and a drive element that is, on the one hand, driven by the transmission element and to which a rotary movement is imparted and that, on the other hand, is disposed so as to impart a rotary movement to a roller guiding the poultry-care conveyor belt (2), where whichever transmission element is in use at the time is designed as a shaft (8) and whichever drive element is in use at the time is designed as a bevel-gear unit (9, 14)
which incorporates a drive-side connection that is referred to as input (10) for connection to the shaft (8) and an output-side connection that is referred to as output (11) for connection to the roller, and where the two poultry-care conveyor belt drives are connected together drive-effectively by the common drive motor (7) by a connecting shaft referred to as main shaft (16),
**characterised in**
**that** a bevel-gear unit is designed as a worm-gear unit (9, 14).

2. Poultry-care conveyor belt system in accordance with claim 1,
**characterised in**
**that** two bevel-gear units (9, 14) are arranged one beside the other and impart a rotary movement to two rollers that are referred to as drive roller (4) and pressure contact roller (6) and are disposed one beside the other,
where the outputs (11) of the two bevel gear units (9, 14) rotate in different directions and
one of the two bevel-gear drives (9, 14) incorporates a second output that is referred to as onward-transmission (12),
and an intermediate shaft (15) connects the onward-transmission (12) drive-effectively to the input (10) of the second bevel-gear unit (14).

3. Poultry-care conveyor belt system in accordance with claim 2,
**characterised in**
**that** the onward-transmission (12) is designed as a kind of extension of the input (10) in such a way that the input (10) and onward-transmission (12) rotate at the same speed.

4. Poultry-care conveyor belt system in accordance with claim 2 or 3,
**characterised in**
**that** the intermediate shaft (15) connects to the onward-transmission (12) of one bevel-gear unit (9, 14) and/or to the input of the other bevel-gear unit (9, 14) in the manner of a slide element.

5. Poultry-care conveyor belt system in accordance with any one of claims 2 to 4,
**characterised in**
**that** one bevel-gear unit (9, 14) is mounted by means of oblong holes (18) on a bracket that carries the bevel-gear unit (9, 14)
in such a way that the distance between the two bevel-gear units (9, 14) can be altered.

6. Poultry-care conveyor belt system in accordance with any one of the foregoing claims,
**characterised in**
**that** two rollers that are referred to as drive roller (4) and pressure contact roller (6) are arranged one beside the other,
where a bevel-gear unit (9, 14) is arranged so as to drive the drive roller (4) or the pressure contact roller (6),
and where the drive roller (4) and the pressure contact roller (6) are connected together drive-effectively by means of a gearwheel pair
in such a way that the roller to which a rotary movement is imparted by the bevel-gear unit (9, 14) imparts a rotary movement to the roller beside it by means of the gearwheel pair.

7. Poultry-care conveyor belt in accordance with claim 6,
**characterised in**
**that** the two gearwheels of the gearwheel pair have a backlash of between 2 mm and 8 mm between them.

8. Poultry-care conveyor belt in accordance with claim 6,
**characterised in**
**that** the two gearwheels of the gearwheel pair have a backlash of between 3 mm and 5 mm between them.

9. Poultry-care conveyor belt in accordance with any one of the foregoing claims,
**characterised in**
**that** the output (11) of one bevel-gear unit (9, 14) is connected to the assigned roller via an angular self-aligning coupling (19).

## Revendications

1. Installation à bandes transporteuses de volaille (1),
comprenant deux bandes transporteuses de volaille (2), disposées sur deux étages superposés,
sachant que chaque bande transporteuse de volaille (2) est entraînée par son propre entraînement,
et sachant que les deux entraînements de bandes transporteuses de volaille sont entraînés par un moteur d'entraînement (7) commun et reliés entre eux par des moyens de liaison assurant l'entraînement,
sachant que chaque entraînement de bandes transporteuses de volaille présente un élément de transmission mobile transmettant sur une certaine distance un mouvement d'entraînement,
et qu'un élément d'entraînement qui d'une part est entraîné par l'élément de transmission et est mis en mouvement rotatif, et qui d'autre part est disposé pour imprimer un mouvement de rotation à un rouleau guidant la bande transporteuse de volaille (2),
sachant que l'élément de transmission respectif est configuré comme arbre (8) et que l'élément d'entrainement respectif est configuré comme renvoi d'angle (9, 14), renvoi qui présente côté entraînement un raccordement appelé « entrée » (10) pour établir la liaison avec l'arbre (8), et côté prise de force un raccordement appelé « sortie » (11) pour établir la liaison avec le rouleau, et sachant que depuis le moteur d'entraînement commun (7) les deux entraînements de bandes transporteuses de volaille sont reliés ensemble, de manière efficace pour l'entraînement, par un arbre de liaison appelé « arbre principal » (16),
**caractérisée en ce**
**qu'**un renvoi d'angle est configuré comme transmission à vis sans fin (9, 14).

2. Installation à bandes transporteuses de volaille selon la revendication 1,
**caractérisée en ce**
**que** deux renvois d'angle (9, 14) sont disposés au voisinage proche l'un de l'autre de sorte à faire entrer en rotation deux rouleaux voisins appelés « rouleau d'entraînement » (4) et « rouleau d'applique » (6),
sachant que les sorties (11) des deux renvois d'angle (9, 14) présentent des sens de rotation différents,
sachant que l'un des deux renvois d'angle (9, 14) présente une seconde sortie appelée « transmission » (12),
et **qu'**un arbre intermédiaire (15) relie la transmission (12) avec l'entrée (10) du second renvoi d'angle (14) de manière efficace pour l'entraînement.

3. Installation à bandes transporteuses de volaille selon la revendication 2,
**caractérisée en ce**
**que** la transmission (12) est configurée sous la forme d'un prolongement de l'entrée (10), de sorte que l'entrée (10) et la transmission (12) tournent à la même vitesse de rotation.

4. Installation à bande transporteuse de volaille selon la revendication 2 ou 3,
**caractérisée en ce**
**que** l'arbre intermédiaire (15) se raccorde sous la forme d'une pièce coulissante à la transmission (12) d'un renvoi d'angle (9, 14) et/ou à l'entrée (10) de l'autre renvoi d'angle (9, 14).

5. Installation à bande transporteuse de volaille selon l'une des revendications 2 à 4,
**caractérisée en ce**
**qu'**un renvoi d'angle (9, 14) est monté au moyen de trous oblongs (18) contre un support portant le renvoi d'angle (9, 14),
de sorte que l'écart entre les deux renvois d'angle (9, 14) est variable.

6. Installation à bandes transporteuses de volaille selon l'une des revendications précédentes,
**caractérisée en ce**
**que** deux rouleaux appelés « rouleau d'entraînement » (4) et « rouleau d'applique » (6) sont disposés au voisinage l'un de l'autre,
sachant qu'un renvoi d'angle (9, 14) est disposé de sorte à entraîner le rouleau d'entraînement (4) ou le rouleau d'applique (6),
et sachant que le rouleau d'entraînement (4) et le rouleau d'applique (6) sont reliés entre eux, de manière efficace pour l'entraînement, au moyen d'une paire de pignons, de sorte que le rouleau mis en rotation par le renvoi d'angle (9, 14) fait entrer en rotation le rouleau voisin au moyen de la paire de pignons.

7. Installation à bandes transporteuses de volaille selon la revendication 6,
**caractérisée en ce**
**que** les deux pignons de la paire de pignons présentent entre eux un jeu compris entre 2 mm et 8 mm.

8. Installation à bandes transporteuses de volaille selon la revendication 6,
**caractérisée en ce**
**que** les deux pignons de la paire de pignons présentent entre eux un jeu compris entre 3 mm et 5 mm.

9. Installation à bandes transporteuses de volaille selon l'une des revendications précédentes,
**caractérisée en ce**
**que** la sortie (11) d'un renvoi d'angle (9, 14) est raccordée, via un accouplement compensateur angulaire (19), au rouleau attribué.
